Europäisches Patentamt

European Patent Office

Office européen des brevets

(19)

(11) Veröffentlichungsnummer: **0 236 539**
**B1**

(12)

# EUROPÄISCHE PATENTSCHRIFT

(45) Veröffentlichungstag der Patentschrift:
20.09.89

(21) Anmeldenummer: 86108608.0

(22) Anmeldetag: 24.06.86

(51) Int. Cl.⁴: $F\,16\,L\quad 5/02$, $F\,16\,L\,59/00$, $E\,04\,B\quad 1/94$

(54) Brandschutzmanschette für Rohrleitungen.

(30) Priorität: 07.03.86 DE 3607555

(43) Veröffentlichungstag der Anmeldung:
16.09.87 Patentblatt 87/38

(45) Bekanntmachung des Hinweises auf die Patenterteilung: 20.09.89 Patentblatt 89/38

(84) Benannte Vertragsstaaten:
AT BE CH DE FR GB IT LI LU NL SE

(56) Entgegenhaltungen:
DE–A– 2 639 647
DE–A– 2 900 924
DE–A– 2 936 846

(73) Patentinhaber: Rolf Kuhn GmbH
Bareislweg 31
D-8132 Tutzing (DE)

(72) Erfinder: Kaiser, Walter
Buchenstrasse 11
D-5927 Erndtebrück (DE)

(74) Vertreter: Grosse, Wolfgang
Patentanwälte Kirschner & Grosse Forstenrieder
Allee 59
D-8000 München 71 (DE)

EP 0 236 539 B1

## Beschreibung

Die Erfindung betrifft eine Brandschutzmanschette für Kunststoffrohre mit aufschäumendem Brandschutzmaterial.

In immer größeren Ausmaßen durchbrechen umfangreiche Leitungssysteme wie Rohrpostleitungen innerhalb von Gebäuden die bereits bestehenden oder geplanten brandschutztechnischen Unterteilungen. Im Brandfall muß aber trotzdem gewährleistet bleiben, daß die Rohrleitung nicht als Leiter für die Sauerstoffversorgung das Brandherdes dient. Zur Unterbrechung der Rohrleitungen im Brandfall werden sogenannte Brandschutzmanschetten verwendet, die in gewissen Abständen um das Rohr gelegt werden und mit einer aufschäumenden Füllung versehen sind. Da die Manschette nach außen von einem widerstandsfähigen Schutzzylinder umgeben ist, quillt im Brandfall bei einer gewissen Aktivierungstemperatur die Füllung nach innen, drückt das Rohr zusammen und verschließt es vollständig.

Derartige Brandschutzmanschetten sind aus der DE-A-26 39 647 bekannt. Dabei werden mehrlagige Umwicklungen aus faser- und wasserhaltigen Natriumsilikatplatten und Zwischenschichten aus Aluminiumfolien unter Wärmeeinwirkung zu Hohlkörpern geformt und diese im Bereich von Durchbrüchen über Rohre aus thermoplastischen Stoffen geschoben und außen mit hitzebeständigen, mechanisch festen Abdeckungen in Wanddurchführung verankert. Dies hat den Nachteil einer sehr aufwendigen nachträglichen Installation bzw. sehr schwierigem Austausch, wenn z. B. bei einer nicht vollständigen Abgeschlossenheit der Füllung gegenüber der Umgebung diese einen allmählichen Alterungsprozeß durchmacht, so daß die Funktion der Manschette im Brandfall nicht mehr vollständig gewährleistet ist, wenn zwischen Herstellung, Einbau und Brandausbruch größere Zeiträume liegen.

Der vorliegenden Erfindung liegt daher die Aufgabe zugrunde, eine Brandschutzmanschette zu schaffen, die trotz sehr sicherer Ummantelung schnell und einfach am Rohr zu befestigen und auszutauschen ist.

Die Aufgabe der Erfindung wird durch die im kennzeichnenden Teil des Anspruchs 1 angegebenen Merkmale gelöst. Dabei konnte eine extrem hohe Alterungsbeständigkeit erreicht werden, ohne daß durch fertigungstechnisch komplizierte und teuere Maßnahmen die Wirtschaftlichkeit und der leichte Einbau der Manschette beeinträchtigt wird.

Eine bevorzugte Ausführungsform der vorliegenden Erfindung wird im folgenden anhand der beigefügten Figuren beispielsweise näher erläutert.

Es zeigen :

Fig. 1 eine perspektivische Ansicht der erfindungsgemäßen Manschette bei geraden Leitungen ;

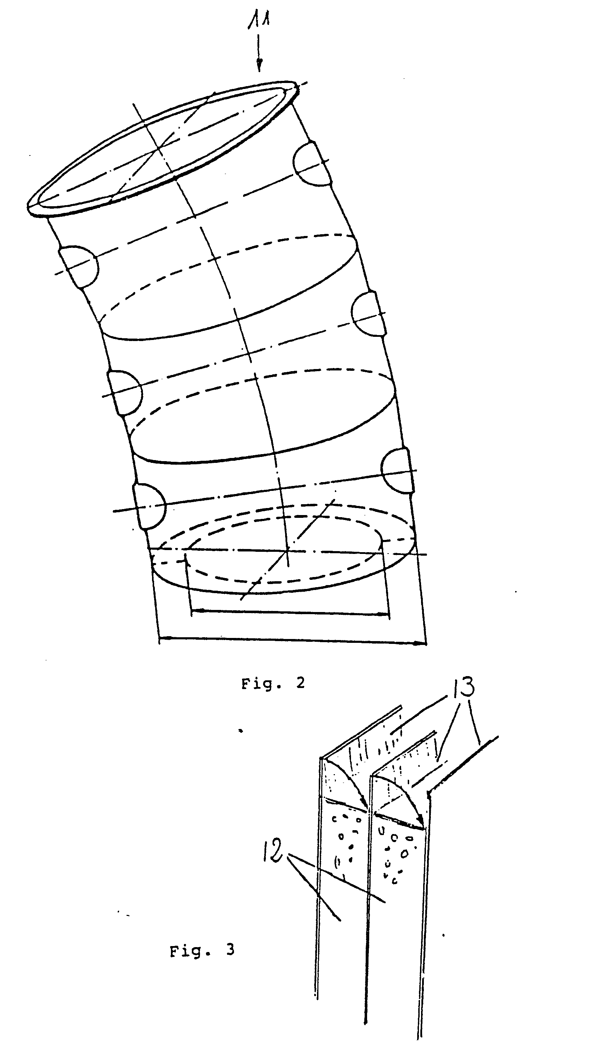

Fig. 2 eine perspektivische Ansicht der erfindungsgemäßen Manschette bei gekrümmten Leitungen und

Fig. 3 eine Schnittdarstellung des Schichtaufbaus zweier Lagen Folien mit Brandschutzmaterial.

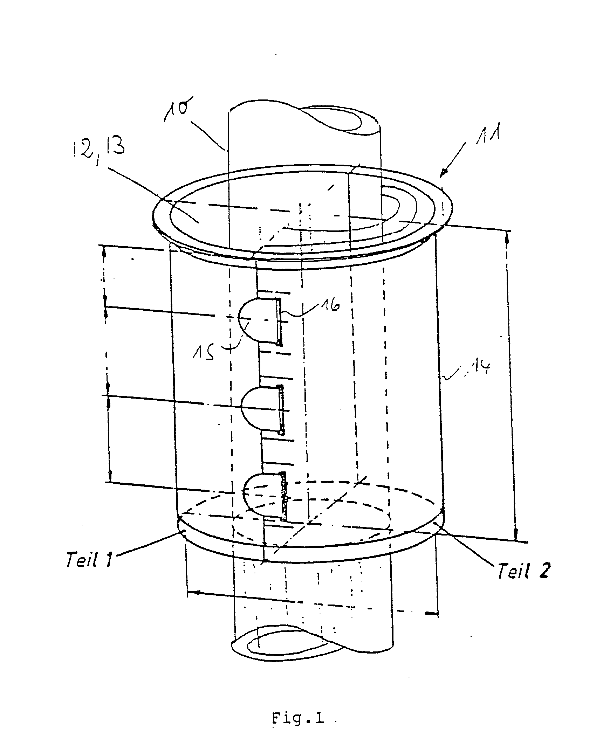

Das Ausführungsbeispiel gemäß Fig. 1 zeigt die das Rohr 10 umgebende Manschette 11, bestehend aus einem Teil 1 und einem Teil 2, in zusammengesetztem Zustand.

Die Höhe der Manschette liegt bei gewöhnlichem Einsatz bei etwa 15 cm. Zwischen dem Rohr 10 und dem Schutzzylinder 14 befindet sich das Brandschutzmaterial 12. Wie aus Fig. 3 ersichtlich, ist das Brandschutzmaterial 12 in eine Verbundfolie 13 eingesiegelt, die aus einer Kombination aus Polyamid, Polyester, Aluminium oder ähnlichem bestehen kann. Das quellende oder aufschäumende Brandschutzmaterial 12 besteht aus einem Material, das bei ca. 100 °C reagiert.

Die vollständige Einsiegelung des Brandschutzmaterials 12 in der Verbundfolie 13 bewirkt gegenüber bestehenden Konstruktionen zwei positive Effekte :

Schutz gegen den Einfluß von $H_2O$, z. B. Kondenswasser, dadurch Garantie der Reagibilität des Brandschutzmaterials,

Garantie einer praktisch unbegrenzten Alterungsbeständigkeit durch die vollständige Abschottung gegen Einwirkung von $CO_2$.

Bisher wurde versucht, einen gewissen Schutz des Brandschutzmaterials durch Bestreichen der Randflächen mit Silikonmasse oder ähnlichem zu erreichen.

Wenn die Brandschutzmanschette um das Rohr gelegt ist, werden die beiden Teile über eine Laschenverbindung fest miteinander verbunden. Dabei werden die Laschen 15 des einen Teils in die entsprechenden Öffnungen 16 des anderen Teils gesteckt. Die Laschen werden dann einzeln umgelegt, bis ein fester Sitz der Manschette erreicht ist. So wird auch ein problemloses Nachrüsten und Austauschen des Brandschutzmaterials ermöglicht. Das zweiteilige System ist gegenüber dem einteiligen einfacher und ermöglicht kürzere Einbauzeiten.

Es ist unerheblich, an welcher Hälfte der Brandschutzmanschette die Laschen 15 und an welcher die Öffnungen 16 angebracht sind. Wichtig ist nur, daß mehrere Laschen vorgesehen sind und diese ohne Bruch des Materials umgebogen werden können. Es ist auch unerheblich, ob die Öffnungen 16 als Ausnehmungen im Schutzzylinder 14 hergestellt sind oder ob auf dem Schutzzylinder 14 ein weiteres Teil aufgebracht wird, bei dem vorgefertigte Erhebungen die Öffnungen 16 zwischen diesem Teil und dem Schutzzylinder bilden. Bei letzterem Ausführungsbeispiel wird auf jeden Fall eine weitere Verstärkung des Schutzzylinders 14 erreicht.

Durch die Art des Zusammenbaus über Laschen und Öffnungen ist jetzt auch ein schnelles und problemloses Verlegen der Brandschutzmanschette in Mauerdurchbrüchen möglich, ebenso ein einfaches Nachrüsten bei bereits bestehenden Leitungssystemen.

Die Verbundfolie 13 bewirkt jedoch nicht nur einen hermetischen und vollständigen Schutz des Brandschutzmaterials 12 gegen Einflüsse von Wasser und Luft, sondern ermöglicht auch, daß die zur Aktivierung notwendige Wärme nicht nur an dem zur Wärmequelle am nächsten gelegenen Teil der Brandschutzmanschette einwirkt, sondern daß diese Verbundfolie 13 als idealer Wärmeleiter diese Wärme in den ganzen Manschettenbereich sofort weitergibt. So wird das Brandschutzmaterial 12 gleichzeitig aktiviert.

Da durch die Verbundfolie 13 ein dichtes Versiegeln des Brandschutzmaterials 12 erreicht wird, tritt ein sehr starker Schutz gegen Alterung dieses Materials ein. Dadurch können die Zeitabstände zwischen den Erneuerungswartungs- und Wartungsarbeiten sehr stark vergrößert werden.

Wie aus Fig. 3 ersichtlich, erleichtert auch die Ausgestaltung der Manschette mit Öffnungen und Laschen die Anpassung der Manschette an gekrümmte Rohrleitungen. Durch das Spiel zwischen den Verbindungselementen ist ein größerer Krümmungsbereich überbrückbar, ohne daß spezielle, exakt angepaßte, gekrümmte Manschetten verwendet werden müssen.

**Patentansprüche**

1. Brandschutzmanschette für Kunststoffrohre mit aufschäumendem Brandschutzmaterial, wobei das aufschäumende Brandschutzmaterial (12) von einer Verbundfolie schützend umgeben ist und ein Schutzzylinder (14) die Verbundfolie (13) und das Brandschutzmaterial (12) umgibt, dadurch gekennzeichnet, daß die Brandschutzmanschette (11) zweiteilig ausgebildet ist, daß der Schutzzylinder (14) über Laschen (15) und Öffnungen (16) schließbar ist und daß die Laschen (15) mit den entsprechenden Öffnungen (16) ein Spiel aufweisen.

2. Brandschutzmanschette nach Anspruch 1, dadurch gekennzeichnet, daß im Randbereich der Außenfläche des Schutzzylinders (14) ein zusätzliches Teil befestigt ist, welches Erhebungen aufweist, die zwischen sich und dem Schutzzylinder die Öffnungen (16) definieren.

**Claims**

1. Fire protection collar for plastic pipes, comprising foaming fire protection material, in which the fire protection material (12) is surrounded by a protecting composite foil, and a protective cylinder (14) surrounds the composite foil (13) and the fire protection material (12), characterised in that the fire protection collar (11) is made in two pieces, that the protective cylinder (14) may be closed by means of tongues (15) and openings (16), and that a tolerance is provided between the tongues (15) and the respective openings (16).

2. Fire protection collar according to claim 1, characterised in that an additional member is fastened to the marginal area of the outer surface of the protective cylinder (14), said additional member having elevations which define the openings (16) between themselves and the protective cylinder.

**Revendications**

1. Manchette de protection contre le feu pour tuyaux en matière plastique, comprenant de la matière de protection contre le feu moussante, dans laquelle la matière de protection contre le feu moussante (12) est entourée d'une feuille composite protégeante, et un cylindre de protection (14) entoure la feuille composite (13) et la matière de protection contre le feu (12), caractérisée en ce que la manchette de protection contre le feu (11) est en deux éléments et que le cylindre de protection (14) est adapté à être fermé au moyen de languettes (15) et d'ouvertures (16), et que les languettes (15) et leurs ouvertures (16) correspondantes présentent un jeu.

2. Manchette de protection contre le feu selon la revendication 1, caractérisée en ce qu'un élément supplémentaire est fixé dans la zone marginale de la face extérieure du cylindre de protection (14), ledit élément présentant des élévations qui définissent les ouvertures (16) entre elles et le cylindre de protection.

Fig.1

1

Fig. 2

Fig. 3